# EUROPÄISCHE PATENTANMELDUNG

(11) **EP 1 168 090 A1**
(43) Veröffentlichungstag der Anmeldung: **02.01.2002**
(21) Anmeldenummer: 01114206.4
(22) Anmeldetag: 12.06.2001
(51) Int. Cl.: G03G 9/09, C09D 5/03, C09D 11/00, H01G 7/02

(54) **Verwendung von Eisen-Azokomplexverbindungen als Ladungssteuermittel**

(30) Priorität: 01.07.2000 DE 10032138
(71) Anmelder: Clariant GmbH, 65929 Frankfurt am Main (DE)
(72) Erfinder: Macholdt, Hans-Tobias, Dr., 64297 Darmstadt-Eberstadt (DE); Michel, Eduard, Dr., 60529 Frankfurt am Main (DE); Baur, Rüdiger, Dr., 65817 Eppstein/Ts. (DE); Pflieger, Dominique, Dr., 68130 Tagsdorf (FR); Kaul, Bansi Laf, Dr., 4105 Biel-Benken (CH)
(74) Vertreter: Hütter, Klaus, Dr.

(57) **Zusammenfassung**

Eisen-Azokomplexverbindungen der Formel (I) werden als Ladungssteuermittel in elektrophotographischen Tonern und Entwicklern, in Pulverlacken, Elektretmaterialien und in elektrostatischen Trennverfahren, in Ink-Jet-Tinten und in Farbfiltern verwendet

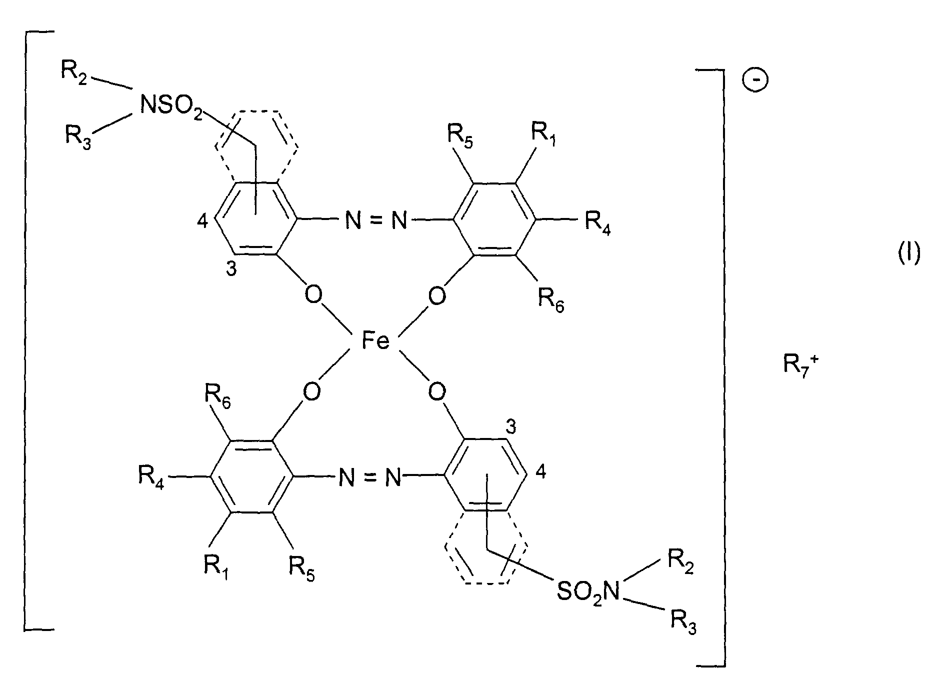

## Beschreibung

Die vorliegende Erfindung liegt auf dem Gebiet der Ladungssteuermittel im Sinne einer Komponente, die das elektrostatische Aufladungsverhalten in einer Matrix selektiv beeinflusst.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z.B. Magnettoner, Flüssigtoner oder Polymerisationstoner im Einsatz. Unter Polymerisationstonern sind solche Toner zu verstehen, die z.B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wässrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist das schnelle Erreichen der gewünschten Ladungshöhe, die Konstanz dieser Ladung über einen längeren Aktivierzeitraum sowie die Unempfindlichkeit des Toners gegen Klimaeinflüsse, wie Temperatur und Luftfeuchtigkeit ein wichtiges Qualitätskriterium. Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Da Tonerbindemittel oftmals eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Darüber hinaus ist für die Praxis wichtig, dass die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C von großem Vorteil. Wichtig ist auch, dass die Thermostabilität über einen längeren Zeitraum (ca. 30 Minuten) und in verschiedenen Bindemittelsystemen gewährleistet ist.

Für eine gute Dispergierbarkeit ist es von Vorteil, wenn das Ladungssteuermittel keine wachsartigen Eigenschaften, keine Klebrigkeit und einen Schmelz- oder Erweichungspunkt von > 150°C, besser > 200°C, aufweist. Klebrigkeit führt häufig zu Problemen beim Zudosieren in die Tonerformulierung, und niedrige Schmelz- oder Erweichungspunkte können dazu führen, dass beim Eindispergieren keine homogene Verteilung erreicht wird, da sich das Material tröpfchenförmig im Trägermaterial zusammenschließt.

Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z.B. Farbmittel, wie Farbstoffe und Pigmente, Wachse oder Fließhilfsmittel, enthalten können oder im Nachhinein zugesetzt bekommen können, wie hochdisperse Kieselsäuren.

Ladungssteuermittel können auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Der Pulverlack oder das Pulver erhält seine elektrostatische Aufladung im allgemeinen nach einem der beiden folgenden Verfahren:
Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht. Auch eine Kombination von beiden Verfahren ist möglich.
Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Darüber hinaus ist gefunden worden, dass Ladungssteuermittel das Aufladungssowie das Ladungsstabilitätsverhalten von Elektretmaterialien, insbesondere Elektretfasern, erheblich verbessern können (DE-A-43 21 289). Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung durch Corona- oder Triboaufladung erhalten.

Weiterhin können Ladungssteuermittel in elektrostatischen Trennvorgängen, insbesondere in Trennvorgängen von Polymeren verwendet werden. So beschreiben Y. Higashiyama et al. (J. Electrostatics 30, pp 203 - 212 (1993)) am Beispiel des äußerlich aufgebrachten Ladungssteuermittels Trimethyl-phenylammonium-tetraphenylborat, wie Polymere für Recyclingzwecke voneinander getrennt werden können. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel ist auch eine Einarbeitung derselben in das Polymer möglich, um beispielsweise ein Polymer innerhalb der triboelektrischen Spannungsreihe zu verschieben und eine entsprechende Trennwirkung zu erhalten. Ebenso lassen sich auf diese Weise andere Polymere wie z. B. Polypropylen (PP) und/oder Polyethylenterephthalat (PET) und/oder Polyvinylchlorid (PVC) voneinander trennen.

Auch Salzmineralien lassen sich trennen, wenn ihnen zuvor ein Mittel zugegeben wurde (Oberflächenkonditionierung), das die substratspezifische elektrostatische Aufladung verbessert (A. Singewald et al., Zeitschrift für Physikal. Chem., Bd. 124, S. 223 - 248 (1981)).

Weiterhin werden Ladungssteuermittel als "Electroconductivity Providing Agents" (ECPA) (JP-05-163 449) in Tinten für Tintenstrahldrucker eingesetzt.

Aus der JP-A-62-129 358 sind Eisenazokomplex-Verbindungen mit unsubstituierten Naphthylresten bekannt, die jedoch eine verbesserungsbedürftige Aufladungshöhe und eine geringe Lichtechtheit aufweisen.

Aufgabe der vorliegenden Erfindung war es, wirksame und ökotoxikologisch verträgliche Ladungssteuermittel zu finden, die insbesondere keine toxischen Schwermetalle enthalten. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Weiterhin sollte ihre Wirkung weitgehend unabhängig von der Harz/Carrier-Kombination sein, um eine breite Anwendung zu erschließen. Ebenso sollten sie in gängigen Pulverlack-Bindemitteln und Elektretmaterialien wie z.B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist bekannt, dass sie die triboelektrische Aufladung von Tonern teilweise nachhaltig beeinflussen können.

Weiterhin sollten die erfindungsgemäß verwendeten Verbindungen auch als Farbmittel in Ink-Jet-Tinten einsetzbar sein, so dass eine gute Wasserlöslichkeit und eine hohe Lichtechtheit wünschenswert sind.

Überraschenderweise hat sich nun gezeigt, dass nachstehend beschriebene Eisen-Azokomplexverbindungen vorteilhafte Ladungssteuereigenschaften, insbesondere eine hohe negative Aufladung, und hohe Thermostabilitäten besitzen, wobei die Ladungssteuereigenschaft weder durch Kombination mit Ruß oder anderen Farbmitteln verloren geht. Darüber hinaus sind die Verbindungen mit den üblichen Toner-, Pulverlack- und Elektretbindemitteln gut verträglich und lassen sich leicht dispergieren. Weiterhin sind die Verbindungen gut wasserlöslich und besitzen eine hohe Lichtechtheit.

Gegenstand der vorliegenden Erfindung ist die Verwendung von Eisen-Azokomplexverbindungen der Formel (I) als Ladungssteuermittel in elektrophotographischen Tonern und Entwicklern, in Pulverlacken, Elektretmaterialien und in elektrostatischen Trennverfahren, in Ink-Jet-Tinten und in Farbfiltern, 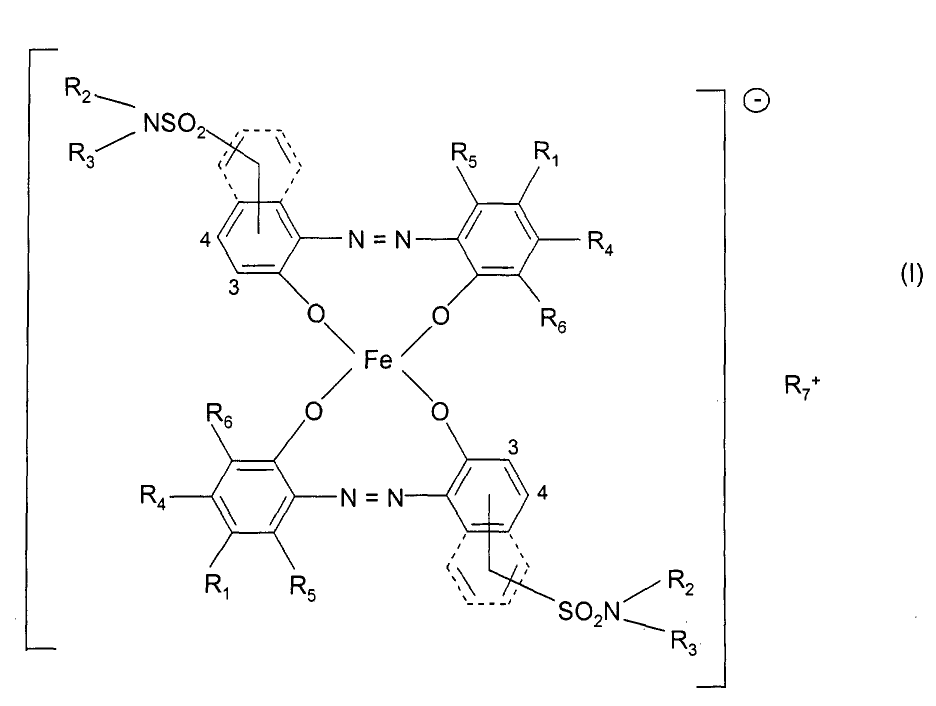 worin
- R₁: Wasserstoff oder ein Rest der Formeln 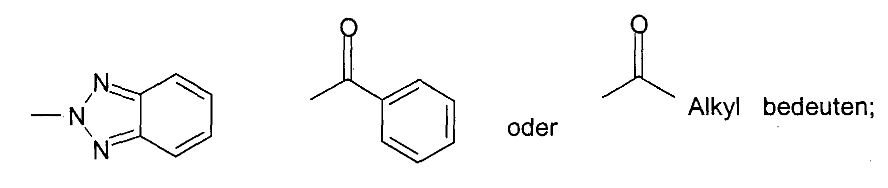
- R₂ und R₃: gleich oder verschieden sind und die Bedeutung Wasserstoff, Alkyl, Alkoxyalkyl, Cycloalkyl oder Aryl haben;
- R₄: Wasserstoff oder Hydroxy;
- R₅: Wasserstoff, Alkyl, Alkoxyalkyl oder Cycloalkyl; und
- R₆: Wasserstoff oder eine Gruppe der Formel (2) 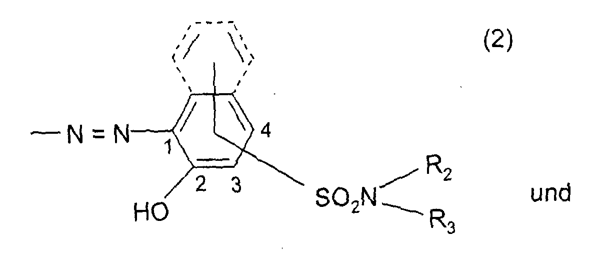
- R₇⁺: Ammonium oder aliphatisches, alicyclisches oder heterocyclisches Ammonium bedeuten.

In den vorstehenden Definitionen der Reste R¹ bis R⁶ bedeutet "Alkyl" vorzugsweise (C₁-C₄)-Alkyl, insbesondere Methyl, Ethyl, n-Propyl, i-Propyl, n-Butyl und t-Butyl. "Alkoxyalkyl" bedeutet vorzugsweise (C₁-C₄)-Alkoxy-(C₁-C₄)-alkyl, insbesondere Methoxy(C₁-C₄)-alkyl, wie z.B. Methoxypropyl.
"Cycloalkyl" bedeutet vorzugsweise C₅-C₆-Cycloalkyl.
"Aryl" bedeutet vorzugsweise unsubstituiertes oder durch 1, 2 oder 3 der folgenden Substituenten substituiertes C₆-C₁₀-Aryl:
Halogen, bevorzugt Cl und Br, OH, C₁-C₄-Alkyl, C₁-C₄-Alkoxy, Cyano, NO₂, C₁-C₄-Alkylcarbonyl, SCN, C₁-C₄-Alkoxycarbonyl, Benzoyl, Phenoxycarbonyl, C₁-C₄-Alkylcarbonyloxy, Aminocarbonyl, Mono-(C₁-C₄-alkyl)-aminocarbonyl, Di-(C₁-C₄-alkyl)-aminocarbonyl, Mono-(C₁-C₄-alkoxy-C₂-C₄-alkyl)-aminocarbonyl, Di-(C₁-C₄-alkoxy-C₂-C₄-alkyl)-aminocarbonyl, Aminosulfonyl, Mono-(C₁-C₄-alkyl)-aminosulfonyl, Di-(C₁-C₄-alkyl)-aminosulfonyl, Mono-(C₁-C₄-alkoxy-C₂-C₄-alkyl)-aminosulfonyl, Di-(C₁-C₄-alkoxy-C₂-C₄-alkyl)-aminosulfonyl und Phenylaminosulfonyl.

R₇⁺ ist vorzugsweise Ammonium, Mono-(C₅-C₂₀-alkyl)-ammonium, Di-(C₅-C₂₀-alkyl)-ammonium, Tri-(C₅-C₂₀-alkyl)ammonium, Tri-(C₅-C₂₀-alkyl-)methyl-ammonium, bevorzugt Mono-C₈-C₁₆-alkylammonium, Di-(C₈-C₁₆-alkyl)-ammonium, Tri-(C₈-C₁₆-alkyl)-ammonium, besonders bevorzugt 4-Amino-2,2,6,6-tetra(C₁-C₂-alkyl)-piperidinium, 4-Hydroxy-2,2,6,6-tetra(C₁-C₂-alkyl)-piperidinium, 4-Keto-2,2,6,6-tetra(C₁-C₂)alkyl-piperidinium und Tri-(C₈-C₁₈-alkyl-)methyl-ammonium. Ganz besonders bevorzugte Gruppen R₇⁺ sind Monooctylammonium, 2-Ethylhexylammonium, 4-Amino-2,2,6,6-tetramethyl-piperidinium, 4-Hydroxy-2,2,6,6-tetramethyl-piperidinium, 4-Keto-2,2,6,6-tetramethyl-piperidinium und Tri-(C₁₀-C₁₆-alkyl)-methyl-ammonium.

Vorzugsweise befinden sich die Sulfamoylgruppen in 4- oder 5-Position am Phenylring, bzw. in 4- oder 6-Position am Naphthylring.

Besonders bevorzugte Verbindungen im Sinne der vorliegenden Erfindung sind solche der Formel (la) 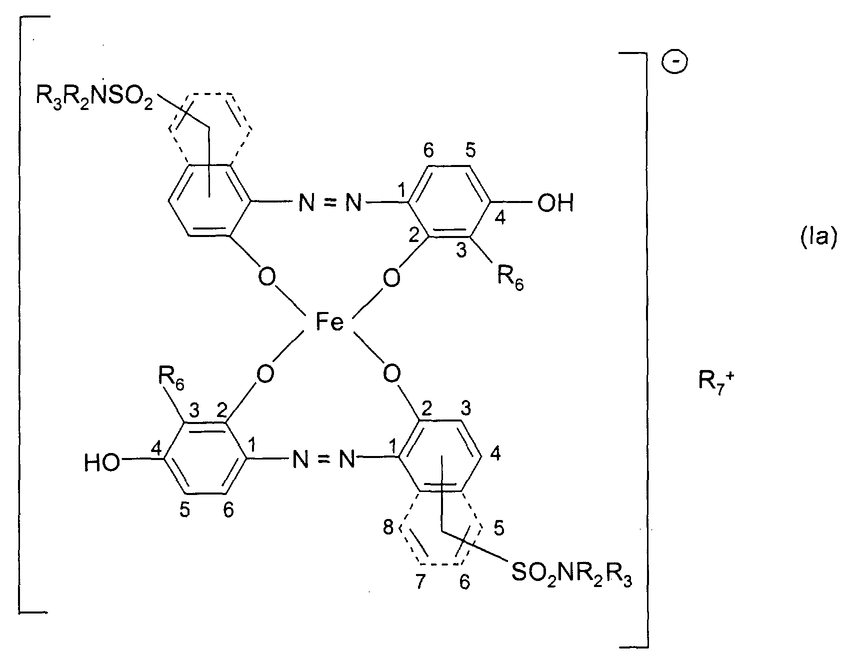 oder Mischungen davon, worin R₂, R₃ und R₆ wie vorstehend definiert und die Gruppe -SO₂NR₂R₃ in 4- oder 5-Position, wenn der Ring ein Phenylring ist, oder in 4- oder 6-Position, wenn der Ring ein Naphthylring ist, steht.

Die Herstellung der Verbindungen der Formel (I) ist in WO 98/05717 beschrieben. Die Verbindungen der Formel (I) können als symmetrische oder als asymmetrische Verbindungen erhalten werden. Unter "symmetrischen" Verbindungen werden solche verstanden, worin beide Reste R₆ Wasserstoff oder beide Reste R₆ Azosulfamoylphenyl der Formel (2) bedeuten. Unter "asymmetrischen" Verbindungen werden solche verstanden, worin die Reste R₆ jeweils unterschiedliche Bedeutung haben.
Bevorzugt im Sinne der vorliegenden Erfindung sind die asymmetrischen Verbindungen, oder Mischungen von asymmetrischen mit symmetrischen Verbindungen.

Die erfindungsgemäß verwendeten Eisen-Azokomplexverbindungen können genau auf das jeweilige Harz/Toner-System abgestimmt werden. Ein weiterer technischer Vorteil dieser Verbindungen liegt darin, dass sie sich gegenüber den unterschiedlichen Bindemittelsystemen inert verhalten und somit vielfältig einsetzbar sind, wobei von besonderer Bedeutung ist, dass sie nicht in der Polymermatrix gelöst sind, sondern als kleine, feinstverteilte Festkörper vorliegen. Ferner zeigen sie hohe und meist konstante Ladungssteuereigenschaften sowie gute Thermostabilitäten. Weiterhin sind die erfindungsgemäß eingesetzten Fe-Azokomplexverbindungen rieselfähig und besitzen eine gute Dispergierbarkeit.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.
Es ist bekannt, dass kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist. Für die Teilchengröße, definiert durch den d₅₀-Wert, finden sich stoffabhängig optimale Wirkbereiche. So sind beispielsweise grobe Teilchen (1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen. Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäß verwendeten Verbindungen sind durch folgende chemisch/physikalische Eigenschaften gekennzeichnet:
Der Wassergehalt, nach der Karl-Fischer Methode bestimmt, liegt zwischen 0,001 % und 30 %, bevorzugt zwischen 0,01 und 25 % und besonders bevorzugt zwischen 0,1 und 15 %, wobei das Wasser adsorbiert und/oder gebunden sein kann, und sich dessen Anteil durch Temperatureinwirkung bis 200°C und Vakuum bis 10⁻⁸ Torr oder durch Wasserzugabe oder Lagerung unter definierten Luftfeuchtebedingungen einstellen lässt.

Die Teilchengröße, mittels lichtmikroskopischer Auswertung oder Laserlichtbeugung bestimmt, und definiert durch den d₅₀-Wert, liegt zwischen 0,01 µm und 1000 µm, bevorzugt zwischen 0,1 und 500 µm und ganz besonders bevorzugt zwischen 0,5 und 400 µm. Besonders vorteilhaft ist es, wenn durch die Mahlung eine enge Teilchengröße resultiert. Bevorzugt ist ein Bereich Δ (d₉₅-d₅₀) von kleiner als 500 µm, insbesondere kleiner als 400 µm.

Die erfindungsgemäß eingesetzten Eisen-Azokomplexverbindungen können auch mit weiteren positiv oder negativ steuernden Ladungssteuermitteln kombiniert werden, um gute anwendungstechnische Aufladbarkeiten zu erzielen, wobei die Gesamt-Konzentration der Ladungssteuermittel zweckmäßig zwischen 0,01 und 50 Gew.-%, bevorzugt zwischen 0,05 und 20 Gew.-%, besonders bevorzugt zwischen 0,1 und 5 Gew.-%, liegt, bezogen auf das Gesamtgewicht des elektrophotographischen Toners, Entwicklers, Pulvers oder Pulverlacks.

Als weitere Ladungssteuermittel kommen beispielsweise in Betracht:
Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit den Eisen-Azokomplexverbindungen kombiniert werden können:
Triphenylmethane, wie z.B. beschrieben in US-A-5 051 585;
Ammonium- und Immoniumverbindungen, wie z.B. beschrieben in US-A-5 015 676; Fluorierte Ammonium- und fluorierte Immoniumverbindungen, wie z.B. beschrieben in US-A-5 069 994; biskationische Säureamide, wie z.B. beschrieben in WO 91/10172; Diallylammoniumverbindungen, wie z.B. beschrieben in DE-A-4 142 541, DE-A-4 029 652 oder DE-A-4 103 610;
Arylsulfid-Derivate, wie z.B. beschrieben in DE-A-4 031 705;
Phenolderivate, wie z.B. beschrieben in EP-A-0 258 651; Phosphoniumverbindungen und fluorierte Phosphoniumverbindungen, wie z.B. beschrieben in US-A-5 021 473 und US-A-5 147 748;
Calix(n)arene, wie z.B. beschrieben in EP-A-0 385 580;
Benzimidazolone, wie z.B. beschrieben in EP-A-0 347 695;
Ringförmig verknüpfte Oligosaccharide, wie z.B. beschrieben in DE-A-4 418 842;
Polyestersalze, wie z.B. beschrieben in DE-A-4 332 170;
Cyclooligosaccharid-Verbindungen, wie z.B. beschrieben in DE-A-197 11 260;
Inter-Polyelektrolyt-Komplexe, wie z.B. beschrieben in DE-A-197 32 995;
salzartige Struktursilikate, wie z.B. beschrieben in DE-A-199 57 245.
Weiterhin geeignet, insbesondere für Flüssigtoner, sind oberflächenaktive, ionische Verbindungen und sogenannte Metallseifen.

Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).
Weiterhin geeignet sind Soyalecithin und N-Vinylpyrrolidon-Polymere.
Weiterhin geeignet sind Natriumsalze von phosphatierten Mono- und Diglyceriden mit gesättigten und ungesättigten Substituenten, AB- Diblockcopolymere von A:
Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calziumstearat, Eisennaphthalit und Zinknaphthalit.
Weiterhin geeignet sind chelatisierende Ladungssteuermittel (EP 0 636 945 A1), metallische (ionische) Verbindungen (EP 0 778 501 A1), Phosphat-Metallsalze, wie in JP- 9 -106107 beschrieben. Weiterhin geeignet sind Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die erfindungsgemäß verwendeten Eisen-Azokomplexverbindungen werden einzeln oder in Kombination miteinander oder mit weiteren, vorstehend genannten Ladungssteuermitteln, in einer Konzentration von 0,01 bis 50 Gew.-%, vorzugsweise von 0,05 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z.B. Kieselgel bzw. mit solchen Trägern vermischt, TiO₂, Al₂O₃, Ruß, aus wäßriger oder nicht-wäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation.

Um elektrophotographische Bunttoner herzustellen, können weitere Farbmittel, wie organische Buntpigmente, anorganische Pigmente oder Farbstoffe, zugesetzt werden. Die organischen Buntpigmente können aus der Gruppe der Azopigmente oder polycyclischen Pigmente oder Mischkristalle (solid solutions) solcher Pigmente sein.

Die Mischungen können in Form der Pulver, durch Mischen von Preßkuchen, sprühgetrockneten Preßkuchen, Masterbatches sowie durch Dispergieren (Extrusion, Kneten, Walzenstuhlverfahren, Perlmühlen, Ultraturrax) in Gegenwart eines Trägermaterials in fester oder flüssiger Form (Tinten auf wäßriger und nicht-wäßriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen und durch Vakuum unterstützt ablaufen. Der Flushvorgang kann in Gegenwart oder Abwesenheit von organischen Lösemitteln und von Wachsen ablaufen.

Insbesondere zur Steigerung der Brillanz, aber auch zur Nuancierung des Farbtones bieten sich Mischungen mit organischen Farbstoffen an, insbesondere solche Farbstoffe, die eine schwarze Farbe haben oder ergeben. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Solvent Black 45, 27; C.I. Reactive Black 31, C.I. Direct Black 168, C.I. Solubilized Sulfur Black 1.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (® Paliochrome) sowie Pigmenten auf Basis cholesterischer Polymere, die in Abhängigkeit vom Beobachtungswinkel unterschiedliche Farbeindrücke ergeben, geeignet. Weitere anorganische Pigmente, wie z.B. Ruß, insbesondere C.I. Pigment Black 7, werden zur Herstellung von Schwarztonern verwendet.

Gegenstand der vorliegenden Erfindung ist auch ein elektrophotographischer Toner, Pulver oder Pulverlack, enthaltend 30 bis 99,99 Gew.-%, vorzugsweise 40 bis 99,5 Gew.-%, eines üblichen Bindemittels, beispielsweise ein Styrol-, Styrolacrylat-, Styrolbutadien-, Acrylat-, Urethan-, Acryl-, Polyester- oder Epoxidharz oder eine Kombination der letzten beiden, 0,01 bis 50 Gew.-%, vorzugsweise 0,05 bis 20 Gew.-%, besonders bevorzugt 0,1 bis 5 Gew.-%, mindestens einer Eisen-Azokomplexverbindung und gegebenenfalls 0,001 bis 50 Gew.-%, vorzugsweise 0,05 bis 20 Gew.-%, eines Farbmittels, jeweils bezogen auf das Gesamtgewicht des elektrophotographischen Toners, Pulvers oder Pulverlacks.

Ferner können die erfindungsgemäß beschriebenen Verbindungen aus "Free-Flow Agents" als zusätzliches Ladungssteuerelement in suspendierter Form oder in trockener Abmischung aufgebracht werden. Die erfindungsgemäß beschriebenen Verbindungen können auch für ein "Carrier-Coating" eingesetzt werden.

Weiterhin wurde gefunden, dass die Eisen-Azokomplexverbindungen der Formel (I) als Farbmittel in Ink-Jet-Tinten auf wäßriger (Mikroemulsionstinten) und nicht-wäßriger ("solvent-based") Basis, sowie in solchen Tinten, die nach dem Hot-melt-Verfahren arbeiten, sowie in UV (Ultraviolett)-härtenden Tinten geeignet sind.

Gegenstand der vorliegenden Erfindung sind auch Ink-Jet-Aufzeichnungsflüssigkeiten, welche einen oder mehrere der Eisen-Azokomplexverbindungen enthalten. Die fertigen Aufzeichnungsflüssigkeiten enthalten im allgemeinen insgesamt 0,5 bis 15 Gew.-%, vorzugsweise 1,5 bis 8 Gew.-%, (trocken gerechnet) eines oder mehrerer, z.B. 2 oder 3, der Verbindungen der Formel (I).

Mikroemulsionstinten basieren auf organischen Lösemitteln, Wasser und ggf. einer zusätzlichen hydrotropen Substanz (Grenzflächenvermittler). Tinten auf nichtwäßriger Basis enthalten im wesentlichen organische Lösemittel und ggf. eine hydrotrope Substanz.

Mikroemulsionstinten enthalten vorzugsweise 0,5 bis 15 Gew.-%, insbesondere 1,5 bis 8 Gew.-%, einer Verbindung der Formel (I), 5 bis 99 Gew.-% Wasser und 0,5 bis 94,5 Gew.-% organisches Lösemittel und/oder hydrotrope Verbindung.

"Solvent based" Ink-Jet-Tinten enthalten vorzugsweise 0,5 bis 15 Gew.-% einer oder mehrerer Verbindungen der Formel (I), 85 bis 99,5 Gew.-% organisches Lösemittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Gegenstand der Erfindung ist auch eine Hot-Melt Ink-Jet-Tinte, bestehend im wesentlichen aus 20 bis 90 Gew.-% Wachs und 1 bis 10 Gew.-% der Eisen-Azokomplexverbindungen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

UV-Tinten enthalten vorzugsweise 0,5 bis 15 Gew.-% einer oder mehrerer Verbindungen der Formel (I), 50 bis 99,5 Gew.-% photopolymerisierbare Monomere (mit z.B. Acyl-, Epoxy-, Vinyl-Gruppen), Photoinitiatoren und/oder weitere Additive, wie z.B. in US 5,275,646 beschrieben.

Zur Herstellung der Aufzeichnungsflüssigkeiten benutztes Wasser wird vorzugsweise in Form von destilliertem oder entsalztem Wasser eingesetzt.

Bei den in den Aufzeichnungsflüssigkeiten enthaltenen Lösemitteln kann es sich um ein organisches Lösungsmittel oder um ein Gemisch derartiger Lösemittel handeln.

Geeignete Lösemittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butylether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Als hydrotrope Verbindungen, die gegebenenfalls auch als Lösemittel dienen, können beispielsweise Formamid, Harnstoff, Tetramethylharnstoff, ∈-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-%, in der Aufzeichnungsflüssigkeit vorhanden.

Die erfindungsgemäßen Ink-Jet-Tinten können hergestellt werden, indem die Eisen-Azokomplexverbindungen der Formel (I) als Pulver, als Präparation, als Suspension oder als Preßkuchen in das Mikroemulsionsmedium oder in das nicht-wäßrige Medium oder in das Wachs zur Herstellung einer Hot-Melt Ink-Jet-Tinte eindispergiert wird. Der Preßkuchen kann auch ein hochkonzentrierter, insbesondere sprühgetrockneter, Preßkuchen, sein.

Darüber hinaus sind Verbindungen der Formel (I) auch geeignet als Farbmittel für Farbfilter, sowohl für die subtraktive wie für die additive Farberzeugung (P. Gregory "Topics in Applied Chemistry: High Technology Application of Organic Colorants" Plenum Press, New York 1991, S. 15 - 25).

In den nachfolgenden Beispielen bedeuten Teile Gewichtsteile und Prozent Gewichtsprozent.

### Herstellungsbeispiel 1

a) 60,7 g (0,3 Mol) 2-Amino-5-(methylaminosulfonyl)-phenol wurden in eine Mischung von 450 g Wasser und 120 g 30 gew.-%ige wässrige HCI eingerührt. Nach Zugabe von 75 g Eis wurde das Amin durch Zugabe von 79 g 4N Natriumnitrit-Lösung diazotiert. Die erhaltene Suspension wurde 3 Stunden bei 0°C gerührt. Dann wurde eine Lösung von 22,2 g Resorcin (0,2 Mol) in 100 g Wasser und 21,2 g Natriumcarbonat langsam zugetropft. Die erhaltene Mischung wurde 8 Stunden bei Raumtemperatur gerührt und durch Zugabe von 30 gew.-%iger wässriger HCI auf pH 1,5 gebracht. Der Niederschlag wurde abfiltriert, mit 4000 g Wasser gewaschen und getrocknet.
b) 80 g des in a) hergestellten Monoazofarbstoffs wurden in einer Mischung von 300 g Wasser, 15 g Dipropylenglykol-monomethylether und 39,4 g Natriumcarbonat suspendiert. Nach Erhitzen auf 98°C für 1 Stunde wurde eine Lösung von 25,2 g FeCl₃ x 6H₂O in 130 g Wasser langsam zugetropft, wobei ein voluminöser Niederschlag des Eisen-Azokomplexes entstand. Die Temperatur wurde im Verlauf von 2 Stunden unter kräftigem Rühren auf 30°C gesenkt und die Suspension langsam mit einer Lösung von 186 Teilen ® Primene 81 R (C₁₂-C₁₄-t-Alkylamine, Rohm & Haas) in 80 g Wasser und 12 g 30 gew.-%iger wässriger HCI umgesetzt. Der entstandene Niederschlag wurde durch Zugabe von etwa 23 g 30 gew.-%iger wässriger HCI auf pH 6,5 gestellt.
Die Mischung wurde 1 Stunde bei Raumtemperatur gerührt, filtriert, der Rückstand mit einer Lösung von 100 g Essigsäure und 900 g Wasser gewaschen und dann getrocknet. Man erhielt einen Eisen-Azokomplex-Farbstoff der Formel 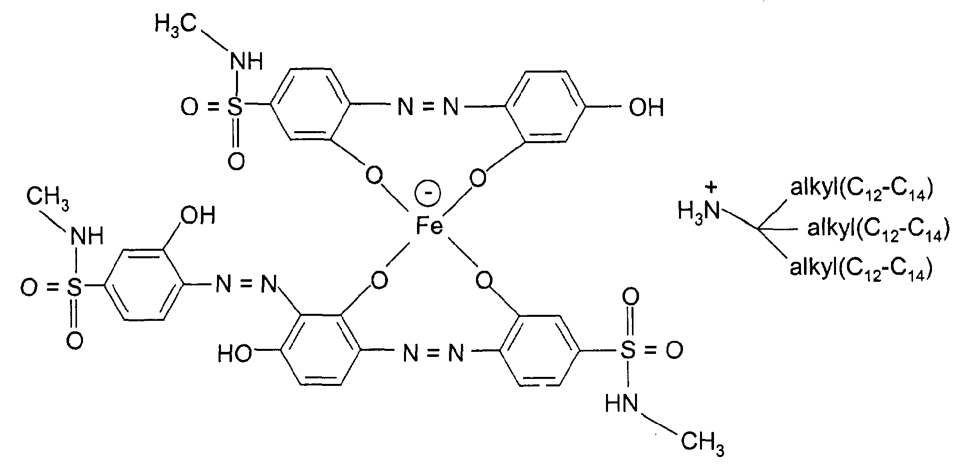 Charakterisierung
Braunes, wasserunlösliches Pulver, mit guter Löslichkeit in Ethanol (bis 400 g/Liter)

| | |
|---|---|
| pH | 5 |
| Leitfähigkeit | 410 µS/cm |
| Restfeuchte | 0,6 % (Karl-Fischer-Methode) |
| Röntgenbeugung: | Es zeigt sich kein Reflexionspeak zwischen zwei Theta 4,0 und zwei Theta 36,0, d.h. die Verbindung ist röntgenamorph |
| DTA | Beginnende Zersetzung ab 200°C (bei 3°C/min Aufheiztempo) |
| Teilchengrößenverteilung | d₅₀ < 71 µm |

### Anwendungsbeispiel 1.1

1 Teil der Verbindung aus Herstellungsbeispiel 1 wird mittels eines Kneters innerhalb von 30 Min. in 95 Teile eines Tonerbindemittels Styrol-n-Butylmethacrylat 60:40 (® Dialec S309) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus Styrol-Acrylat-beschichteten Magnetitteilchen der Größe 50 bis 200 µm besteht.

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 min | - 22 |
| 30 min | - 30 |
| 2 h | -35 |
| 24 h | -35 |

### Anwendungsbeispiel 1.2

6 Teile der Verbindung aus Herstellungsbeispiel 1 werden unter Rühren (Flügelrührer oder Dissolver) in 94 Teile Methylethylketon gelöst. Die so erhaltene Ink-Jet-Tinte zeigt auf Ink-Jet-Papier gute bis sehr gute Echtheiten (Lichtechtheit: 5-6). Bewertung nach der Blauskala (ISO 12040 / DIN 16525), wobei die niedrigste Note 1 eine sehr geringe Lichtechtheit bedeutet, und die höchste Note 8 eine sehr hohe Lichtechtheit.
1 = sehr gering, 2 = gering, 3 = mäßig, 4 = ziemlich gut, 5 = gut, 6 = sehr gut, 7 = vorzüglich, 8 = hervorragend

### Vergleichsbeispiele Lichtechtheit:

Nach der vorstehend beschriebenen Methode wurde die Lichtechtheit der in JP-A-62-129 358, Beispiele 8, 9 und 14 beschriebenen Verbindungen bestimmt. Bei allen drei Verbindungen war die Lichtechtheit gering bis mäßig (2-3).

### Anwendungsbeispiel 1.3

5 Teile der Verbindung gemäß Herstellungsbeispiel 1 werden in 30 Teilen Glykolether (® Dowanol EPh, Fa. Dow Chemical) unter Rühren gelöst. Anschließend gibt man diese Lösung unter Rühren in eine Lösung von 50 Teilen deionisiertem Wasser mit 15 Teilen Xylol-Sulfonat.
Die so erhaltene Mikroemulsionstinte hat die Zusammensetzung:
30 Teile Glykolether,
5Teile Verbindung aus Herstellungsbeispiel 1,
15 Teile Xylolsulfonat (Grenzflächenvermittler, Hydrotrope Substanz),
50 Teile Deionisiertes Wasser.

Man erhält eine Ink-Jet-Tinte mit hoher Lichtechtheit (5 - 6) und guter Düsengängigkeit.

### Herstellungsbeispiel 2

a) 78,1 g (0,3 Mol) 2-Amino-4-(3'-methoxypropylamino-sulfonyl)-phenol wurden in eine Mischung von 600 g Wasser und 120 g 30 gew.-%ige wässrige HCI eingerührt. Nach Zugabe von 75 g Eis wurde das Amin durch Zugabe von 79 g 4N Natriumnitrit-Lösung diazotiert. Die erhaltene Suspension wurde 3 Stunden bei 0°C gerührt. Dann wurde eine Lösung von 22,2 g (0,2 Mol) Resorcin in 100 g Wasser und 21,2 g Natriumcarbonat langsam zugetropft. Die erhaltene Mischung wurde 8 Stunden bei Raumtemperatur gerührt und durch Zugabe von 30 gew.-%iger wässriger HCI auf pH 1,5 gebracht. Der Niederschlag wurde abfiltriert, mit 4000 g Wasser gewaschen und getrocknet.
b) 96,2 g des in a) hergestellten Monoazofarbstoffs wurden in einer Mischung von 300 g Wasser, 15 g Dipropylenglykol-monomethylether und 39,4 g Natriumcarbonat suspendiert. Nach Erhitzen auf 98°C für 1 Stunde wurde eine Lösung von 25,2 g FeCl₃ x 6H₂O in 130 g Wasser langsam zugetropft, wobei ein voluminöser Niederschlag des Eisen-Azokomplexes entstand. Die Temperatur wurde im Verlauf von 2 Stunden unter kräftigem Rühren auf 30°C gesenkt und die Suspension langsam mit einer Lösung von 186 g ® Primene 81 R (C₁₂-C₁₄-t-Alkylamine, Rohm & Haas) in 80 g Wasser und 12 g 30 gew.-%iger wässriger HCI umgesetzt. Der entstandene Niederschlag wurde durch Zugabe von etwa 23 g 30 gew.-%iger wässriger HCI auf pH 6,5 gestellt.
Die Mischung wurde 1 Stunde bei Raumtemperatur gerührt, filtriert, der Rückstand mit Wasser salzfrei gewaschen und dann getrocknet. Man erhielt eine Verbindung der Formel 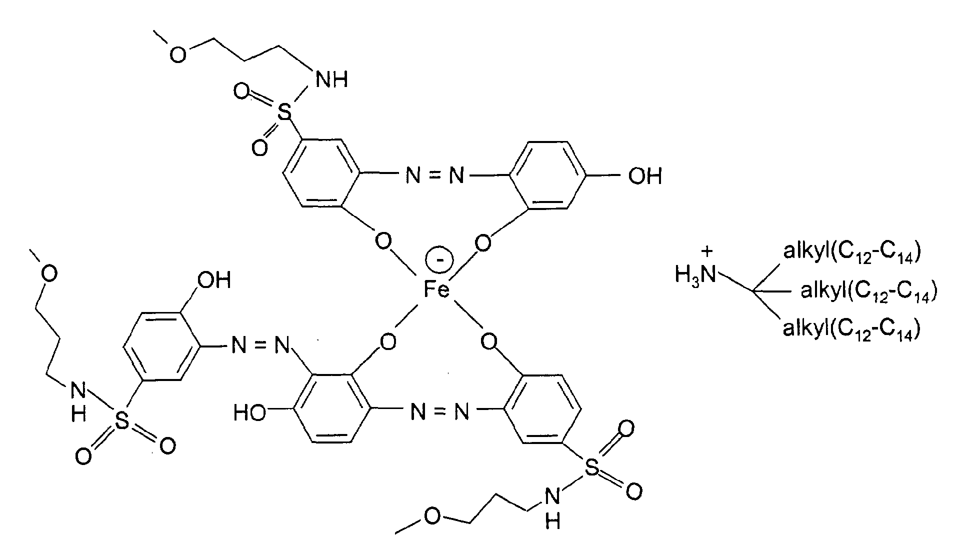 Charakterisierung

| | |
|---|---|
| pH | 6,4 |
| Leitfähigkeit | 610 µS/cm |
| Restfeuchte | 0,8 % (Karl-Fischer-Methode) |
| Röntgenbeugung | Es zeigt sich kein Reflexionspeak zwischen zwei Theta 4,0 und zwei Theta 36,0, d.h. die Verbindung ist röntgenamorph |
| DTA | Beginnende Zersetzung ab 200°C (bei 3°C/min Aufheiztempo) |
| Teilchengrößenverteilung | d₅₀ = 78 µm |

### Anwendungsbeispiel 2.1

Es wird wie in Anwendungsbeispiel 1.1 verfahren, wobei anstelle eines Teiles der Verbindung aus Herstellungsbeispiel 1, nunmehr 1 Teil der Verbindung aus Herstellungsbeispiel 2 eingearbeitet wurde.
In Abhängigkeit von der Aktivierdauer werden folgende q/m-Werte gemessen:

| Aktivierdauer | q/m [µC/g] |
|---|---|
| 10 Min | -11 |
| 30 Min | -19 |
| 2 Std. | -29 |
| 24 Std. | -29 |

### Anwendungsbeispiel 2.2

1 Teil der Verbindung aus Herstellungsbeispiel 2 wird, wie in Anwendungsbeispiel 1.1 beschrieben, in 99 Teile eines Pulverlackbindemittels auf Basis eines carboxylhaltigen Polyesterharzes, z.B. ® Crylcoat 430 (UCB, Belgien), homogen eingearbeitet.
Zur Bestimmung der Abscheidequote werden 50 g des Testpulverlackes mit einem definierten Druck durch eine Tribopistole versprüht. Durch Differenzwiegung läßt sich die abgeschiedene Pulverlackmenge bestimmen und eine Abscheidequote in % definieren, sowie durch die Ladungsübertragung ein Stromfluß [µA] abgreifen.

| Druck [bar] | Strom [µA] | Abscheidequote [%] |
|---|---|---|
| 5 | 0,7 | 80 |
| 3 | 0,4 | 55 |
| | | |

Anwendungsbeispiel 3 (Vergleichsbeispiel)
Zur Bestimmung der Abscheidequote des reinen Pulverlackbindemittels ® Crylcoat 430 wird wie oben beschrieben verfahren, ohne jedoch einen Zusatzstoff einzukneten.

| Druck [bar] | Strom [µA] | Abscheidequote [%] |
|---|---|---|
| 3 | 0,1 | 5 |

Anwendungsbeispiel 4 (Vergleichsbeispiel)
Es wird wie in Anwendungsbeispiel 1.1 verfahren, wobei lediglich das reine Tonerbindemittel ohne Zusätze eingesetzt wird.

In Abhängigkeit von der Aktivierdauer werden folgende q/m-Werte gemessen:

| Aktivierdauer | Aufladung q/m [µC/g] |
|---|---|
| 10 Min | -8 |
| 30 Min | -12 |
| 2 Std. | -18 |
| 24 Std. | -19 |

## Patentansprüche

1. Verwendung von Eisen-Azokomplexverbindungen der Formel (I) als Ladungssteuermittel in elektrophotographischen Tonern und Entwicklern, in Pulverlacken, Elektretmaterialien und in elektrostatischen Trennverfahren, in Ink-Jet-Tinten und in Farbfiltern, 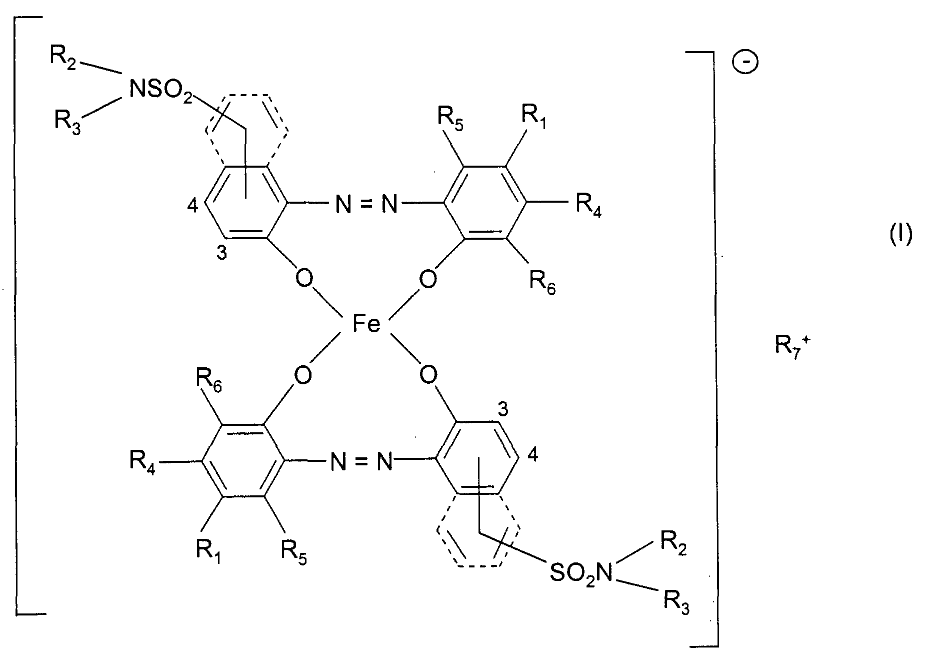 worin
R₁ Wasserstoff oder ein Rest der Formeln 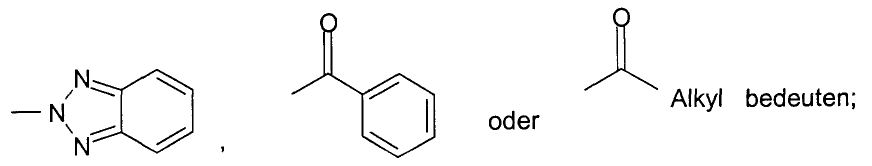
R₂ und R₃ gleich oder verschieden sind und die Bedeutung Wasserstoff, Alkyl, Alkoxyalkyl, Cycloalkyl oder Aryl haben;
R₄ Wasserstoff oder Hydroxy;
R₅ Wasserstoff, Alkyl, Alkoxyalkyl oder Cycloalkyl; und
R₆ Wasserstoff oder eine Gruppe der Formel (2) 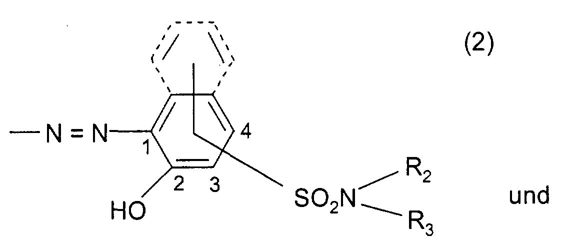
R₇⁺ Ammonium oder aliphatisches, alicyclisches oder heterocyclisches Ammonium bedeuten.

2. Verwendung nach Anspruch 1, **dadurch gekennzeichnet, dass**
R₇⁺ Ammonium, Mono-(C₅-C₂₀-alkyl)-ammonium, Di-(C₅-C₂₀-alkyl)-ammonium, Tri-(C₅-C₂₀-alkyl)-ammonium, Tri-(C₅-C₂₀-alkyl)-methyl-ammonium, 4-Amino-2,2,6,6-tetra(C₁-C₂-alkyl)-piperidinium, 4-Hydroxy-2,2,6,6-tetra(C₁-C₂-alkyl)-piperidinium oder 4-Keto-2,2,6,6-tetra(C₁-C₂-alkyl)-piperidinium ist.

3. Verwendung nach Anspruch 1 oder 2, **dadurch gekennzeichnet, dass**
R₇⁺ Monooctylammonium, 2-Ethylhexyl-ammonium, 4-Amino-2,2,6,6-tetramethylpiperidinium, 4-Hydroxy-2,2,6,6-tetramethylpiperidinium, 4-Keto-2,2,6,6-tetramethylpiperidinium oder Tri-(C₁₀-C₁₆-alkyl-)methyl-ammonium bedeutet.

4. Elektrophotographischer Toner, enthaltend
30 bis 99,99 Gew.-% eines Bindemittels,
0,01 bis 50 Gew.-% mindestens einer Eisen-Azokomplexverbindung der Formel (I) gemäß Anspruch 1, 2 oder 3,
gegebenenfalls 0,01 bis 50 Gew.-% eines weiteren Ladungssteuermittels, und gegebenenfalls 0,001 bis 50 Gew.-% eines Farbmittels,
jeweils bezogen auf das Gesamtgewicht (100 Gew.-%) des elektrophotographischen Toners.

5. Elektrophotographischer Toner nach Anspruch 4, **dadurch gekennzeichnet, dass** das weitere Ladungssteuermittel eine Verbindung aus der Gruppe der Triphenylmethane; Ammonium- und Immoniumverbindungen, Iminiumverbindungen; fluorierten Ammonium- und fluorierten Immoniumverbindungen; biskationischen Säureamide; polymeren Ammoniumverbindungen; Diallylammoniumverbindungen; Arylsulfid-Derivate, Phenolderivate; Phosphoniumverbindungen und fluorierten Phosphoniumverbindungen; Calix(n)arene, ringförmig verknüpften Oligosaccharide und deren Derivate, insbesondere Borester-Derivate, Interpolyelektrolytkomplexe; Polyestersalze; Metallkomplexverbindungen, insbesondere Salicylat-Metall-Komplexe und Salicylat-Nichtmetalkomplexe, Hydroxycarbonsäure-Metall-Komplexe und Hydroxycarbonsäure-Nichtmetallkomplexe, Benzimidazolone; Azine, Thiazine oder Oxazine ist.

6. Pulverlack, enthaltend
30 bis 99,99 Gew.-% eines Bindemittels,
0,01 bis 50 Gew.-% mindestens einer Eisen-Azokomplexverbindung der Formel (I) gemäß Anspruch 1, 2 oder 3, gegebenenfalls 0,01 bis 50 Gew.-% eines weiteren Ladungssteuermittels, und gegebenenfalls 0,001 bis 50 Gew.-% eines Farbmittels,
jeweils bezogen auf das Gesamtgewicht (100 Gew.-%) des Pulverlacks.

7. Pulverlack nach Anspruch 6, **dadurch gekennzeichnet, dass** das weitere Ladungssteuermittel eine Verbindung aus der Gruppe der Triphenylmethane; Ammonium- und Immoniumverbindungen, Iminiumverbindungen; fluorierten Ammonium- und fluorierten Immoniumverbindungen; biskationischen Säureamide; polymeren Ammoniumverbindungen; Diallylammoniumverbindungen; Arylsulfid-Derivate, Phenolderivate; Phosphoniumverbindungen und fluorierten Phosphoniumverbindungen; Calix(n)arene, ringförmig verknüpften Oligosaccharide und deren Derivate, insbesondere Borester-Derivate, Interpolyelektrolytkomplexe; Polyestersalze; Metallkomplexverbindungen, insbesondere Salicylat-Metall-Komplexe und Salicylat-Nichtmetalkomplexe, Hydroxycarbonsäure-Metall-Komplexe und Hydroxycarbonsäure-Nichtmetallkomplexe, Benzimidazolone; Azine, Thiazine oder Oxazine ist.

8. Ink-Jet-Tinte, enthaltend 0,5 bis 15 Gew.-% mindestens einer Fe-Azokomplexverbindung der Formel (I) gemäß Anspruch 1, 2 oder 3.

9. Ink-Jet-Tinte nach Anspruch 8, bestehend im wesentlichen aus 0,5 bis 15 Gew.-% mindestens einer Fe-Azokomplexverbindung der Formel (I) gemäß Anspruch 1, 2 oder 3,
5 bis 99 Gew.-% Wasser, und 0,5 bis 94,5 Gew.-% eines organischen Lösemittels, einer hydrotropen Verbindung oder einer Mischung davon.

10. Ink-Jet-Tinte nach Anspruch 8, bestehend im wesentlichen aus 0,5 bis
15 Gew.-% mindestens einer Fe-Azokomplexverbindung der Formel (I) gemäß Anspruch 1, 2 oder 3, und
0,5 bis 99,5 Gew.-% eines organischen Lösemittels, einer hydrotropen Verbindung oder einer Mischung davon.

11. Ink-Jet-Tinte nach Anspruch 8, bestehend im wesentlichen aus 1 bis
10 Gew.-% mindestens einer Fe-Azokomplexverbindung der Formel (I) gemäß Anspruch 1, 2 oder 3, und 20 bis 90 Gew.-% Wachs.
